# EUROPEAN PATENT APPLICATION

(11) **EP 3 327 088 A1**
(43) Date of publication of application: **30.05.2018**
(21) Application number: 16200879.1
(22) Date of filing: 28.11.2016
(51) Int. Cl.: C09B 23/01, C09B 23/08, B41M 5/323, B41M 5/34

(54) **A MULTICOLOUR LASER MARKING METHOD**

(71) Applicant: AGFA-GEVAERT NV, 2640 Mortsel (BE); AGFA NV, 2640 Mortsel (BE)
(72) Inventor: Loccufier, Johan, 2640 Mortsel (BE); Goethals, Fabienne, 2640 Mortsel (BE); Lazreg, Faima, 2640 Mortsel (BE)
(74) Representative: Viaene, Kris

(57) **Abstract**

A laser markable article comprising a first laser markable layer capable of forming a colour upon exposure to UV radiation, a second and optionally a third laser markable layer capable of forming a colour upon exposure to IR radiation, characterized in that the second or third laser markable layer comprises a specific polymethine infrared radiation absorbing dye (IR dye). Also a colour laser marking method is disclosed wherein a first colour is formed upon exposure to UV radiation and a second and optionally a third colour upon exposure to IR radiation.

## Description

### Technical field of the Invention

The present invention relates to a method wherein more than one colour is formed by laser marking.

### Background art for the invention

Laser marking is a well known technique to produce images on various substrates.

For example, EP-A 1657072 (Database) discloses a method of making a black barcode on a substrate by laser marking. In the method, a laser markable ink comprising a solvent, a binder and an oxyanion of a multivalent metal is applied on a substrate and laser marked using a CO₂ laser.

There is a growing interest to produce multicolour images by laser marking.

EPA-2722367 (Agfa) discloses a method to produce a multicolour image by laser marking three different laser markable layers, each capable of forming a different colour, with three IR lasers, each having a different emission wavelength. Selectivity, i.e. addressing each laser markable layer without addressing the other laser markable layers, is strived for by using three different IR absorbing dyes, each having a different absorption maximum. However, as the availability of IR absorbing dyes having an absorption maximum above 1150 - 1200 nm is very limited, the distance between the absorption maxima of the different IR dyes is limited, which may result in colour contamination.

WO2013/068729 (Database) discloses another method to produce a multicolour image by laser marking wherein both UV radiation and IR radiation are used. A blue and red colour is obtained by exposing a diacytelene containing laser markable layer to UV and IR radiation, while another colour then blue and red, for example yellow, is obtained by exposing another layer comprising a leuco dye to IR radiation. In addition, IR radiation is used to activate the diacetylene containing layer before exposing it to UV radiation. The laser markable layers may contain an IR absorbing compound, for example ITO. As the IR radiation is used to form different colours, a problem associated with this method may also be colour contamination.

There remains a need to provide a laser marking method to produce multicoloured images wherewith minimal colour contamination is realized and therefore resulting in laser marked images having a high colour gamut.

### Summary of the invention

It is an object of the invention to provide a laser marking method having minimal colour contamination to produce multicolour images having a high colour gamut.

This object has been realized by the laser marking method according to claim 1.

Further advantages and embodiments of the present invention will become apparent from the following description.

### Brief description of the drawings

Figure 1 shows a schematic presentation of a first embodiment of a laser markable method according to the present invention.
Figure 2 shows a schematic presentation of a second embodiment of a laser markable method according to the present invention.
Figure 3 shows a schematic presentation of a third embodiment of a laser markable method according to the present invention.

### Detailed description of the invention

### Definitions

The term "monofunctional" in e.g. monofunctional polymerizable compound means that the polymerizable compound includes one polymerizable group.

The term "difunctional" in e.g. difunctional polymerizable compound means that the polymerizable compound includes two polymerizable groups.

The term "polyfunctional" in e.g. polyfunctional polymerizable compound means that the polymerizable compound includes more than two polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethyl-propyl, 2,2 dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₂ to C₆-alkenyl group.

Unless otherwise specified a substituted or unsubstituted alkynyl group is preferably a C₂ to C₆-alkynyl group.

Unless otherwise specified a substituted or unsubstituted aralkyl group is preferably a phenyl or naphthyl group including one, two, three or more C₁ to C₆-alkyl groups.

Unless otherwise specified a substituted or unsubstituted alkaryl group is preferably a C₇ to C₂₀-alkyl group including a phenyl group or naphthyl group.

Unless otherwise specified a substituted or unsubstituted aryl group is preferably a phenyl group or naphthyl group

Unless otherwise specified a substituted or unsubstituted heteroaryl group is preferably a five- or six-membered ring substituted by one, two or three oxygen atoms, nitrogen atoms, sulfur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulfonamide, -Cl, -Br, -I, -OH, -SH, -CN and -NO₂.

### Laser markable Article

The laser markable article according to a first embodiment of the invention comprises a first laser markable layer (10) capable of forming a colour (C-1) upon exposure to UV radiation and a second laser markable layer (20) capable of forming a colour (C-2) upon exposure to IR radiation, both laser markable layers provided on a substrate (50), characterized in that the second laser markable layer comprises a polymethine IR dye as described below.

The first and second laser markable layer may be provided on top of each other or an intermediate layer may be provided between both layers, for example to prevent cross talk between the layers.

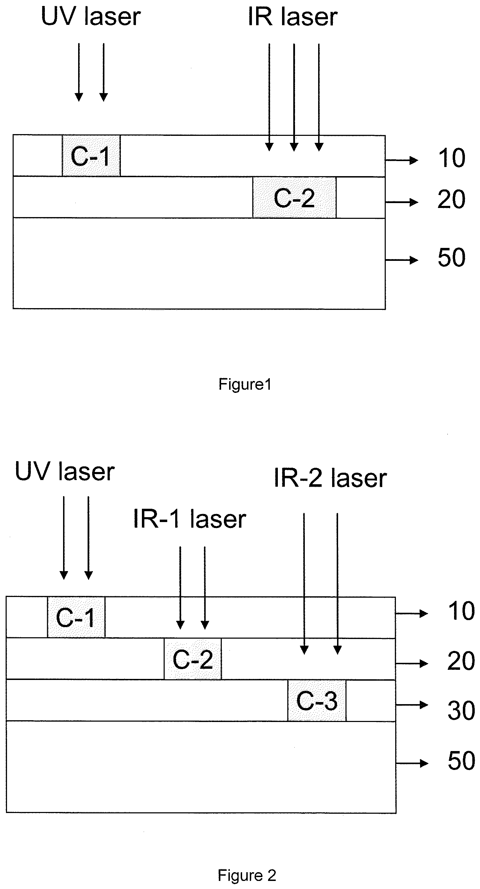

In Figure 1, the second laser markable layer (20) is located nearest to the substrate (50), while the first laser markable layer (10) is provided on top of the second laser markable layer. However, the order of both layers on the substrate may be reversed.

The first laser markable layer may also be provided on one side of the substrate, while the second laser markable layer is provided on the other side of the substrate.

The laser markable article according to a second embodiment of the invention further comprises a third laser markable layer (30) capable of forming a colour (C-3) upon exposure to IR radiation provided on the substrate, wherein the second or third laser markable layer comprises a polymethine IR dye as described below. Preferably, both the second and third laser markable layer comprises the polymethine dye as described below.

In Figure 2, the third laser markable layer (30) is located nearest to the substrate (50) while the second (20) and the first (10) laser markable layers, in this order, are provided on the third laser markable layer. However, the order in which the three laser markable layers are provided on the substrate may vary.

Intermediate layers may be provided between the laser markable layers.

The laser markable article according to a third embodiment of the invention comprises a first laser markable layer capable of forming a colour (C-1) upon exposure to UV radiation and another colour (C-2) upon exposure to IR radiation and a second laser markable layer capable of forming a colour (C-3) upon exposure to IR radiation, both laser markable layers provided on a substrate, wherein the first or the second laser markable layer comprises the polymethine IR dye as described below.

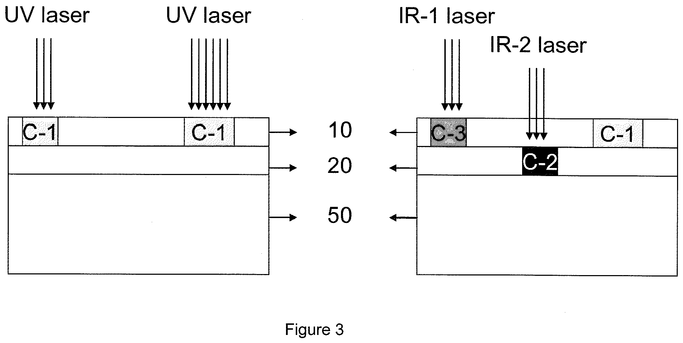

In Figure 3, the second laser markable layer (20) is located nearest to the substrate (50), while the first laser markable layer (10) is provided on the second laser markable layer. However, the order of both layers on the substrate may be reversed.

Preferably, both the first and second laser markable layer comprises the polymethine dye as described below.

The laser markable article according to the third embodiment may further comprise a third laser markable layer capable of forming a colour (C-4) upon exposure to IR radiation.

The first laser markable layer is also referred to hereinafter as a UV laser markable layer and the second and third laser markable layers as IR laser markable layers.

### UV Laser Markable layer

The UV laser markable layer is capable of forming a colour upon exposure to UV radiation.

All systems capable of irreversibly generating colour upon exposure to UV, or precursors thereof, may be used in the first laser markable layer. Precursors of UV colour forming systems may be converted into the active form by an additional stimulus such as heat or laser exposure at a different wavelength than the colour forming wavelength.

Several UV induced colour forming mechanisms are known in the art.

The combination of a photoacid and an acid responsive colorant has been disclosed in WO2008022952 (Ciba Specialty Chemicals Holding Inc.).

Another colour forming system is based on the UV-induced topological polymerization of diacetylenes, which allows generating different colours depending on the degree of polymerization (Principles of Polymerization, ISBN 0-471-27400-3). The use of this chemistry as a colour-forming system has been disclosed in WO2006/018640 (Datalase). To increase the UV-stability of these materials, reversibly activatable diacetylenes may be used. Diacetylene polymerization after thermal activation has been disclosed in WO2012/114121 (Datalase).

Further UV colour forming systems are based on photo-oxidation as described in detail by Rolf Dessauer (Advances in Photochemistry, 28, 129-261 (2005)) and implemented in the Dylux instant-access imaging materials by Dupont. A preferred UV colour forming system based on such photo-oxidation comprises hexaarylbisimidazoles (HABIs) and photo-oxidizable leucodyes, such as leucocrystal violet. To improve the sensitivity, a sensitizer may be added to such composition, for example the sensitizers disclosed in EP-A 1349006 (Agfa), WO2005/029187 (Agfa) and EP-A 2153280 (Agfa).

The laser markable article according to a third embodiment of the invention comprises a first laser markable layer capable of forming a first colour, for example blue, upon exposure to UV radiation and a second colour, for example red, upon exposure to IR radiation. Such a first laser markable layer preferably contains a diacetylene based colour forming system, as disclosed in WO2013/068729 (Datalase). A blue colour is formed by exposing the layer to UV radiation; a red colour is formed by further exposing blue coloured regions of the layer to IR radiation. Preferably, a diacetylene based colour forming system is first activated by heat, for example by exposing it with an IR laser. To improve the response of the layer to IR radiation, such a layer preferably contains an IR absorber. In principle any known IR absorber may be used, such as IR absorbing dyes or IR absorbing pigments as described in for example WO2012/114121 (Datalase) (page 9, line 27 to page 11, line 5) and EP-A 2722367 (Agfa). However, preferred IR dyes are those described below.

### IR Laser Markable layer

The IR laser markable layers are capable of forming a colour upon exposure to IR radiation.

In the laser markable article according to the first embodiment of the invention, the IR laser markable layer comprises a polymethine IR dye as described below.

In the laser markable article according to the second embodiment of the invention, the second or third laser markable layer comprises a polymethine IR dye as described below. Preferably, both the second and the third laser markable layers comprise a polymethine IR dye as described below.

Preferably, the absorption maximum in the IR region of the IR absorber used in the second laser markable layer and that of the IR absorber used in the third laser markable layer differs from each other. The difference is preferably at least 100 nm, more preferably at least 150 nm, most preferably at least 200 nm.

In the laser markable article according to the third embodiment of the invention, it is preferred that both the UV laser markable layer and the IR laser markable layer contains an IR absorber. The absorption maximum in the IR region of each IR absorber is preferably different from each other. Preferably, both the UV laser markable layer and the IR laser markable layers comprise a polymethine IR dye as described below. Preferably, the absorption maximum in the IR region of the IR absorber used in the first laser markable layer and that of the IR absorber used in the second laser markable layer differs from each other. The difference is preferably at least 100 nm, more preferably at least 150 nm, most preferably at least 200 nm.

The amount of IR dye in a dried laser markable layer is preferably between 0.01 and 1, more preferably between 0.025 and 0.5 wt % relative to the total dry weight of the coating. Enough IR dye has to be present to ensure sufficient colour density formation upon exposure to IR radiation. However, using too much IR dye may result in unwanted background colouration of the laser markable materials.

A combination of two, three or more IR dyes may be used in the laser markable layer. Such a combination of IR dyes may be used to optimize the absorption spectrum of the laser markable layer. Also, a mixture of IR dyes may improve the solubility of the IR dyes in the laser markable composition wherewith the laser markable layer is prepared.

The IR laser markable layer preferably comprises a leuco dye and a colour developing agent or colour developing agent precursor. The IR laser markable layer may further comprise an acid scavenger and a UV absorber.

The IR laser markable layers are preferably prepared from aqueous laser markable compositions. Compared to solvent based compositions, such aqueous laser markable compositions are preferred for health and safety reasons.

To prepare aqueous laser markable composition, the IR dyes and leuco dyes are preferably encapsulated, such as disclosed in for example for example WO2006/052843 (Fuji Film Hunt). Particular preferred aqueous laser markable compositions are disclosed in the applications PCT/EP2016/061069 (filed 18-05-2016) and PCT/EP2016/060533 (filed on 11-05-2016) both from Agfa.

### Laser marking method

In the laser marking method according to the present invention, both an ultraviolet (UV) and an infrared (IR) laser are used.

A first embodiment of the method of forming a multicolour laser marked image according to the present invention comprises the steps of:
- imagewise exposing the first laser markable layer (10) of a first embodiment of the laser markable article as described above with a UV laser thereby forming regions having a first colour (C-1),
- imagewise exposing the second laser markable layer (20) of a first embodiment of the laser markable article as described above with a first IR laser thereby forming regions forming a second colour (C-2).

Figure 1 shows a schematic representation of the method according to the first embodiment of the invention.

The emission wavelength of the first IR laser preferably matches the absorption maximum in the IR region of the cyanine IR dye of the IR laser markable layer.

A second embodiment of the method of forming a multicolour laser marked image according to the present invention comprises the steps of:
- imagewise exposing the first laser markable layer (10) of a second embodiment of the laser markable article as described above with a UV laser thereby forming regions having a first colour (C-1),
- imagewise exposing the second laser markable layer (20) of a second embodiment of the laser markable article as described above with a first IR laser thereby forming regions forming a second colour (C-2),
- imagewise exposing the third laser markable layer (30) of a second embodiment of the laser markable article as described above with a second IR laser thereby forming regions forming a third colour (C-3),
wherein the first and the second IR laser may be the same.

Figure 2 shows a schematic representation of the method according to the second embodiment of the invention.

To improve the selectivity of the method, the emission wavelength of the first and the second IR laser are preferably different from each other. The difference between the emission wavelengths of both IR lasers is preferably at least 100 nm, more preferably at least 150 nm, most preferably at least 200 nm.

Preferably, the emission wavelength of the first or second IR laser matches the absorption maximum of the cyanine IR dye of the second or third laser markable layer.

As the IR absorption of the cyanine IR dye is quite narrow, an increasing distance between the emission wavelengths of the first and the second IR laser may result in an improved selectivity.

Both the second and the third laser markable layer may comprise a polymethine IR dye as described below, each IR dye having a different absorption maximum in the IR region, enabling a selective addressability with two IR lasers, each having a different emission wavelength.

According to a third embodiment of the invention, the method of forming a multicolour laser marked image comprises the steps of:
- imagewise exposing the first laser markable layer (10) of a third embodiment of the laser markable article as described above with a UV laser thereby forming regions having a first colour (C-1),
- imagewise exposing the regions having a first colour with a first IR laser thereby forming regions having a third colour (C-3),
- imagewise exposing the second laser markable layer of a third embodiment of the laser markable article as described above with a second IR laser thereby forming a second colour (C-2),
wherein the first and second IR laser may be the same.

Figure 3 shows a schematic representation of the method according to the third embodiment of the invention.

This method may be applied to, for example, a laser marking material wherein the first laser markable layer contains a diacetylene based colour forming system and the second layer markable layer contains a leuco dye based colour forming system, as disclosed in WO2013/068729 (Datalase).

Such a first laser markable layer may form a blue and red colour. The blue colour is formed by exposing the layer to UV radiation; the red colour is formed by further exposing blue coloured regions of the layer to IR radiation. A yellow colour, or another colour, may then be laser marked in the second laser markable layer by exposing it to IR radiation.

Preferably, the diacetylene based colour forming system is first activated by heat, for example by exposing it with an IR laser, before exposing it to UV radiation.

The activation step renders the diacetylene based colour forming system more sensitive to UV radiation.

The activation may be carried out imagewise, or overall activation of the laser markable layer may be used. Preferably, the activation is carried out imagewise with an IR laser. That IR laser is preferably the same laser as the first or the second IR laser. However, the activation may be carried out with a third IR laser, different from the first or second IR laser.

When the activation of the first laser markable layer is carried out imagewise, the UV radiation may be an overall UV radiation. However, an imagewise UV radiation is preferred.

The first and second IR laser may the same laser. For example in WO2013/068729 a single IR laser, a CO₂ laser or a 1550 nm fibre IR laser is used for activating the diacetylene containing layer, IR exposing the blue coloured areas of the diacetylene containing layer to form red coloured regions, and IR exposing a leuco dye containing layer to form a yellow colour. Selectivity is obtained by adjusting the energy of the laser. Using the polymethine dye as described below in the first or second laser markable layer may improve the selectivity of the laser marking method by increasing the sensitivity of the first or second laser markable layer, enabling colour formation with less energy of the IR laser.

However, to further improve the selectivity of the method, the emission wavelength of the first and the second IR laser are preferably different from each other. The difference between the emission wavelengths of both IR lasers is preferably at least 100 nm, more preferably at least 150 nm, most preferably at least 200 nm.

In a preferred embodiment, the emission wavelength of the first or second IR laser matches the absorption maximum of the polymethine IR dye of the first or second laser markable layer. When both the first and the second laser markable layer contain a polymethine IR dye as described below, each having a different absorption maximum in the IR region, it is preferred that both IR lasers match the absorption maxima of both IR dyes.

As the IR absorption of a polymethine IR dye as described below is quite narrow, an increasing distance between the emission wavelengths of the first and the second IR laser may result in an improved selectivity.

For example, when the second laser markable layer contains a polymethine IR dye as described below having an absorption maximum around 1064 nm, the first laser markable layer contains an IR absorber which absorbs at 1550 nm, the first IR laser has an emission wavelength of 1550 nm and the second IR laser has an emission wavelength around 1064 nm, then IR exposure of the first laser markable layer with the 1550 nm laser will not address the second laser markable layer, resulting in no colour contamination. When the sensitivity of the second laser markable towards 1064 nm IR radiation is much larger that that of the first laser markable layer, the 1064 nm IR radiation will not trigger colour formation in the first laser markable layer.

### UV laser

An UV laser has its emission wavelength in the UV region. Preferred UV lasers have an emission wavelength between 250 and 450 nm, more preferably between 300 and 400 nm.

Preferred UV laser are the commercially available InGaN-based semiconductor laser diodes having a wavelength of approximately 405 nm.

### IR laser

The infrared laser may be a continuous wave or a pulsed laser.

For example a CO₂ laser, a continuous wave, high power infrared laser having an emission wavelength of typically 10600 nm (10.6 micrometer) may be used.

CO₂ lasers are widely available and cheap. A disadvantage however of such a CO₂ laser is the rather long emission wavelength, limiting the resolution of the laser marked information.

To produce high resolution laser marked data, it is preferred to use a near infrared (NIR) laser having an emission wavelength between 780 and 2500, preferably between 800 and 1500 nm in the laser marking step.

A particularly preferred NIR laser is an optical pumped semiconductor laser. Optically pumped semiconductor lasers have the advantage of unique wavelength flexibility, different from any other solid-state based laser. The output wavelength can adjusted allowing a perfect match between the laser emission wavelength and the absorption maximum of an optothermal converting agent present in the laser markable layer.

A preferred pulsed laser is a solid state Q-switched laser. Q-switching is a technique by which a laser can be made to produce a pulsed output beam. The technique allows the production of light pulses with extremely high peak power, much higher than would be produced by the same laser if it were operating in a continuous wave (constant output) mode, Q-switching leads to much lower pulse repetition rates, much higher pulse energies, and much longer pulse durations.

The lasermarked "image" comprises data, images, barcodes, etc.

### Polymethine infrared radiation absorbing dye

The IR dyes according to the present invention are polymethine IR dyes having at least one structural element according to Formula I or Formula II. 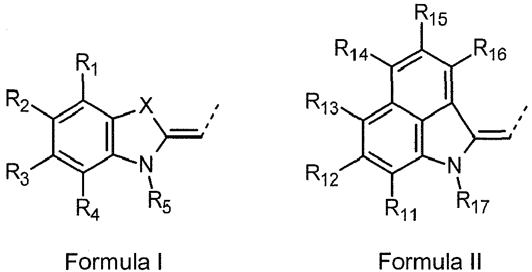 wherein
X is selected from the group consisting of O, NR₈, S and CR₉R₁₀,
R₁ to R₄ and R₁₁ to R₁₆ are independently selected from the group consisting of a hydrogen atom, a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted (hetero)aryl group, a halogen, an alkoxy group, a carboxylic acid, an ester, an amide, a thioether, sulfone, a sulfoxide, a sulfonamide and a sulfonic acid,
R₅, R₈, R₉, R₁₀ and R₁₇ are independently selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted (hetero)aryl group,
R₁ and R₂, R₂ and R₃, R₃ and R₄, R₄ and R₅, R₉ and R₁₀, R₁₁ and R₁₂, R₁₂ and R₁₃, R₁₄ and R₁₅, R₁₅ and R₁₆, and R₁₁ and R₁₇ may represent the necessary atoms to form a substituted or unsubstituted 5 to 8 membered ring, the dashed line represents the bond to the rest of the cyanine IR dye.

The IR dye is preferably a hepta- or nonamethine cyanine dye, more preferably a heptamethine cyanine dye.

R₃ and R₄ preferably represent a hydrogen atom.

X preferably represents CR₉R₁₀.

R₁ and R₂ preferably represent the necessary atoms to form a substituted or unsubstituted aromatic ring.

R₁₁, R₁₂, R₁₄, R₁₅ and R₁₆ preferably represent a hydrogen atom.

R₁₃ preferably is selected from the group consisting of a hydrogen atom, a halogen, an alkoxy group, a nitro group, an amide, an amine, a thioether, an amide, a sulfonamide, a sulfoxide and a sulfone. A hydrogen atom, a halogen and an alkoxy group being particularly preferred.

In a preferred embodiment, the cyanine IR dye has a structure according to Formula III, 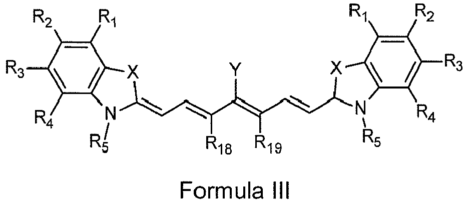 wherein
R₁ to R₅ and X have the same meaning as in Formula I,
R₁₈ and R₁₉ are independently selected form the group consisting of a hydrogen atom, a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted (hetero)aryl group,
R₁₈ and R₁₉ may represent the necessary atoms to form a 5 to 8 membered ring, Y is selected from the group consisting of a hydrogen atom, a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted (hetero)aryl group, a disubstituted amine group, a thioether, a sulfone, a sulfoxide, an amide, a sulfonamide and a halogen.

Y preferably represents a sulfone.

R₁₈ and R₁₉ preferably represent the necessary atoms to form a 5 or 6 membered ring, an unsubstituted 5 or 6 membered ring being more preferred.

In another preferred embodiment, the IR dye has a structural moiety according to Formula IV, 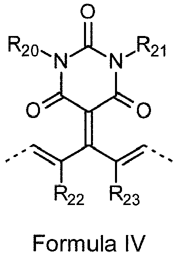 wherein
R₂₀ and R₂₁ are independently selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted (hetero)aryl group,
R₂₂ and R₂₃ are independtly selected from a hydrogen atom, a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted (hetero)aryl group,
R₂₂ and R₂₃ may represent the necessary atoms to form a substituted or unsubstituted 5 or 6 membered ring,
the dashed line represents the bond to the rest of the IR dye.

R₂₂ and R₂₃ preferably represent an unsubstituted 5 or 6 membered ring.

R₂₀ and R₂₁ preferably represent a substituted or unsubstituted alkyl group.

In another preferred embodiment of the present the cyanine IR dye has a structure according to Formula V, 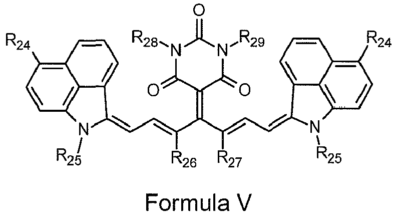 wherein
R₂₄ is selected from the group consisting of a hydrogen atom, a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted (hetero)aryl group, a halogen, an alkoxy group, a carboxylic acid, an ester, an amide, a thioether, sulfone, a sulfoxide, a sulfonamide and a sulfonic acid, R₂₅, R₂₈ and R₂₉ are independently selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted (hetero)aryl group,
R₂₆ and R₂₇ represent the necessary atoms to form a substituted or unsubstituted 5 or 6 membered ring.

R₂₄ is preferably selected from the group consisting of a hydrogen atom, a halogen and an alkoxy group.

R₂₈ and R₂₉ preferably represent a substituted or unsubstituted alkyl group.

Specific examples of cyanine dyes according to the present invention are given in Table 1 without being limited thereto.

**Table 1**

| | |
|---|---|
| 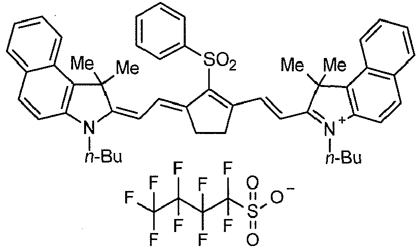 | IR-1 |
| 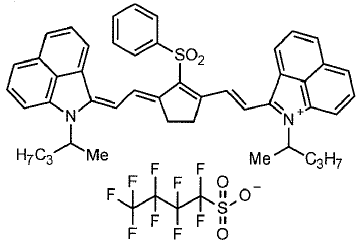 | IR-2 |
| 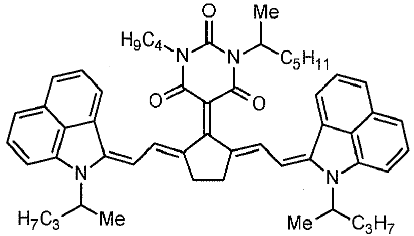 | IR-3 |
| 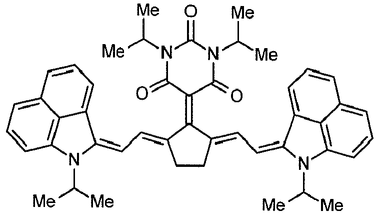 | IR-4 |
| 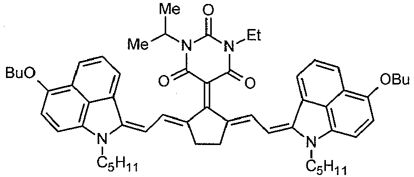 | IR-5 |
| 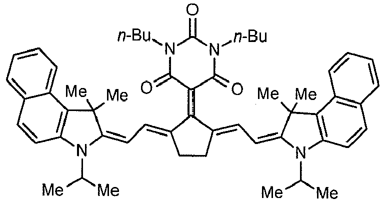 | IR-6 |
| 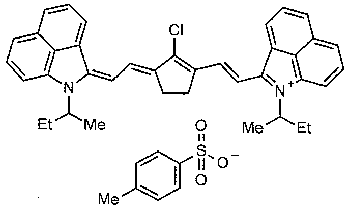 | IR-7 |
| 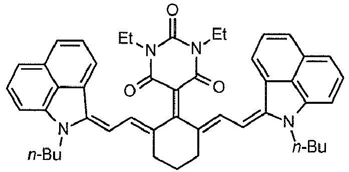 | IR-8 |
| 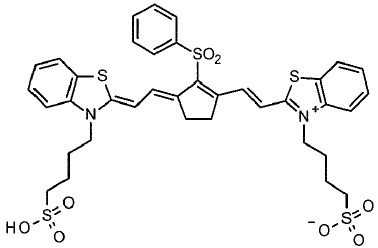 | IR-9 |
| 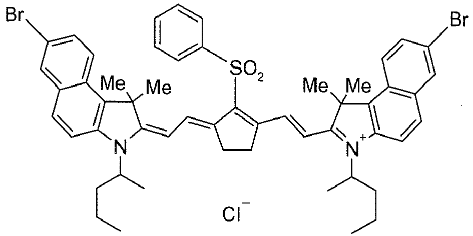 | IR-10 |
| 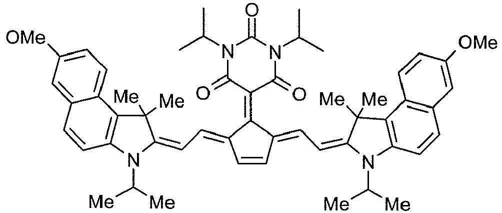 | IR-11 |
| 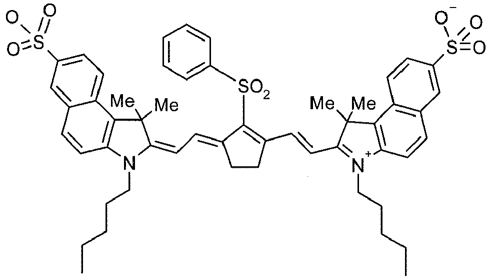 | IR-12 |
| 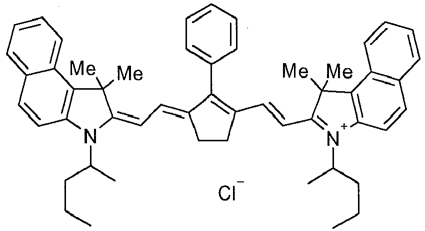 | IR-13 |
| 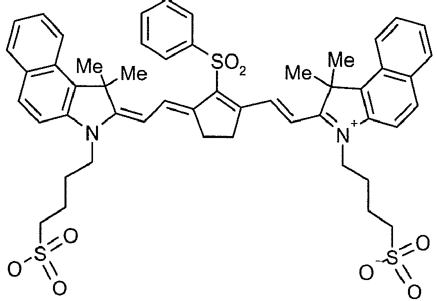 | IR-14 |
| 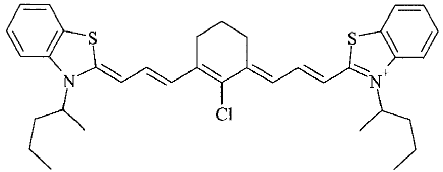 | IR-15 |
| 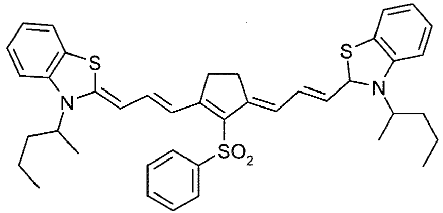 | IR-16 |
| 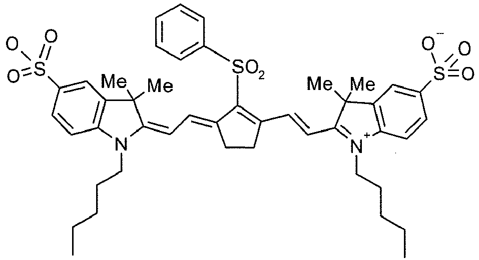 | IR-17 |
| 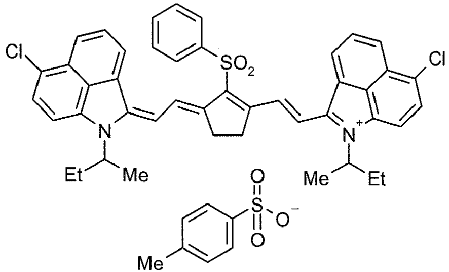 | IR-18 |
| 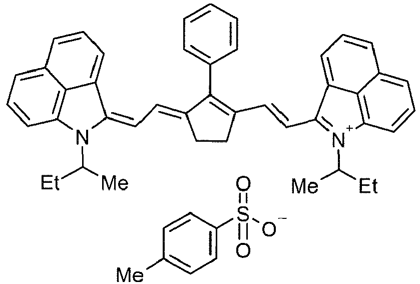 | IR-19 |
| 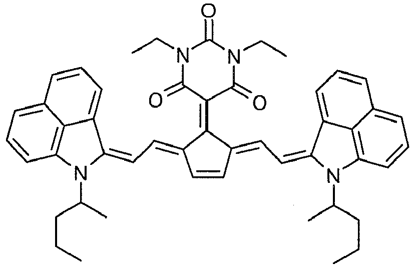 | IR-20 |

### Leuco dye

A leuco dye is a substantially colourless compound, which may form a coloured dye upon inter- or intra-molecular reaction. The inter- or intra-molecular reaction may be triggered by heat formed during exposure with an IR laser or by exposure to UV radiation.

Examples of leuco dyes are disclosed in WO2015/165854, paragraph [069] to [093].

### Colour developing agent

A colour developing agent is capable of reacting with a leuco dye thereby forming a colour.

A colour developing agent may be used when the leuco dye is separated from the colour developing agent, for example by encapsulating the leuco dye, as disclosed in for example EP-A 2954373 (FUJIFILM HUNT). Upon exposure to heat, the encapsulated leuco dye is liberated and may react with the colour developing agent, thereby forming a colour.

Various electron accepting substances may be used as colour developing agent in the present invention. Examples thereof include phenolic compounds, organic or inorganic acidic compounds and esters or salts thereof.

Specific examples include bisphenol A; tetrabromobisphenol A; gallic acid; salicylic acid; 3-isopropyl salicylate; 3-cyclohexyl salicylate; 3-5-di-tert-butyl salicylate; 3,5-di-α-methyl benzyl salicylate; 4,4'-isopropylidenediphenol; 1,1'-isopropylidene bis(2-chlorophenol); 4,4'-isopropylene bis(2,6-dibromo-phenol); 4,4'-isopropylidene bis(2,6-dichlorophenol); 4,4'-isopropylidene bis(2-methyl phenol); 4,4'-isopropylidene bis(2,6-dimethyl phenol); 4,4'-isopropylidene bis(2-tert-butyl phenol); 4,4'-sec-butylidene diphenol; 4,4'-cyclohexylidene bisphenol; 4,4'-cyclohexylidene bis(2-methyl phenol); 4-tert-butyl phenol; 4-phenyl phenol; 4-hydroxy diphenoxide; α-naphthol; β-naphthol; 3,5-xylenol; thymol; methyl-4-hydroxybenzoate; 4-hydroxy-acetophenone; novolak phenol resins; 2,2'-thio bis(4,6-dichloro phenol); catechol; resorcin; hydroquinone; pyrogallol; fluoroglycine; fluoroglycine carboxylate; 4-tert-octyl catechol; 2,2'-methylene bis(4-chlorophenol); 2,2'-methylene bis(4-methyl-6-tert-butyl phenol); 2,2'-dihydroxy diphenyl; ethyl p-hydroxybenzoate; propyl p-hydroxybenzoate; butyl p-hydroxy-benzoate; benzyl p-hydroxybenzoate; p-hydroxybenzoate-p-chlorobenzyl; p-hydroxybenzoate-o-chlorobenzyl; p-hydroxybenzoate-p-methylbenzyl; p-hydroxybenzoate-n-octyl; benzoic acid; zinc salicylate; 1-hydroxy-2-naphthoic acid; 2-hydroxy-6-naphthoic acid; 2-hydroxy-6-zinc naphthoate; 4-hydroxy diphenyl sulphone; 4-hydroxy-4'-chloro diphenyl sulfone; bis(4-hydroxy phenyl)sulphide; 2-hydroxy-p-toluic acid; 3,5-di-tert-zinc butyl salicylate; 3,5-di-tert-tin butyl salicylate; tartaric acid; oxalic acid; maleic acid; citric acid; succinic acid; stearic acid; 4-hydroxyphthalic acid; boric acid; thiourea derivatives; 4-hydroxy thiophenol derivatives; bis(4-hydroxyphenyl) acetate; bis(4-hydroxyphenyl)ethyl acetate; bis(4-hydroxyphenyl)acetate-n-propyl; bis(4-hydroxy-phenyl)acetate-n-butyl; bis(4-hydroxyphenyl)phenyl acetate; bis(4-hydroxyphenyl)-benzyl acetate; bis(4-hydroxyphenyl)phenethyl acetate; bis(3-methyl-4-hydroxy-phenyl)acetate; bis(3-methyl-4-hydroxy-phenyl)methyl acetate; bis(3-methyl-4-hydroxyphenyl)acetate-n-propyl; 1,7-bis(4-hydroxyphenylthio)3,5-dioxaheptane; 1,5-bis(4-hydroxy-phenylthio)3-oxaheptane; 4-hydroxy phthalate dimethyl; 4-hydroxy-4'-methoxy diphenyl sulfone; 4-hydroxy-4'-ethoxy diphenyl sulfone; 4-hydroxy-4'-isopropoxy diphenyl sulfone; 4-hydroxy-4'-propoxy diphenyl sulfone;4-hydroxy-4'-butoxy diphenyl sulfone; 4-hydroxy-4'-isopropoxy diphenyl sulfone; 4-hydroxy-4'-sec-butoxy diphenyl sulfone; 4-hydroxy-4'-tert-butoxy diphenyl sulfone; 4-hydroxy-4'-benzyloxy diphenyl sulfone; 4-hydroxy-4'-phenoxy diphenyl sulfone; 4-hydroxy-4'-(m-methyl benzoxy)diphenyl sulfone; 4-hydroxy-4'-(p-methyl benzoxy)diphenyl sulfone; 4-hydroxy-4'-(o-methyl benzoxy)diphenyl sulfone; 4-hydroxy-4'-(p-chloro benzoxy)diphenyl sulfone and 4-hydroxy-4'-oxyaryl diphenyl sulfone.

A preferred colour developing agent is a metal salt of salicylic acid, for example zinc salicylate. A particularly preferred colour developing agent is zinc 3,5-bis(α-methylbenzyl) salicylate.

### Colour developing agent precursor

A colour developing agent precursor is capable of forming a colour developing agent, for example upon exposure to heat.

All publicly-known photo- and thermal acid generators can be used for the present invention. They can optionally be combined with a photosensitizing dye. Photo- and thermal acid generators are for example widely used in conventional photoresist material. For more information see for example " Encyclopaedia of polymer science", 4th edition, Wiley or "Industrial Photoinitiators, A Technical Guide", CRC Press 2010.

Preferred classes of photo- and thermal acid generators are iodonium salts, sulfonium salts, ferrocenium salts, sulfonyl oximes, halomethyl triazines, halomethylarylsulfone, α-haloacetophenones, sulfonate esters, t-butyl esters, allyl substituted phenols, t-butyl carbonates, sulfate esters, phosphate esters and phosphonate esters.

Preferred colour developing precursors are disclosed in WO2015/091688 (AGFA GEVAERT).

### Substrate

There is no real limitation on the type of substrate. The substrates may have wood, paper, metal or polymeric surfaces for printing.

The substrate may also be primed, e.g. by a white primer or ink.

The substrate may be porous, as e.g. textile, paper and card board substrates, or substantially non-absorbing substrates such as e.g. a plastic substrate having a polyethylene terephthalate surface.

Preferred substrates including surfaces of polyethylene, polypropylene, polycarbonate, polyvinyl chloride, polyesters like polyethylene terephthalate (PET), polyethylene naphthalate (PEN) and polylactide (PLA) and polyimide.

The substrate may also be a paper substrate, such as plain paper or resin coated paper, e.g. polyethylene or polypropylene coated paper. There is no real limitation on the type of paper and it includes newsprint paper, magazine paper, office paper, wallpaper but also paper of higher grammage, usually referred to as boards, such as white lined chipboard, corrugated board and packaging board.

The substrates may be transparent, translucent or opaque. Preferred opaque substrates includes so-called synthetic paper, like the Synaps™ grades from Agfa-Gevaert which are an opaque polyethylene terephthalate sheet having a density of 1.10 g/cm³ or more.

There is no restriction on the shape of the substrate. It can be a flat sheet, such a paper sheet or a polymeric film or it can be a three dimensional object like e.g. a plastic coffee cup. The three dimensional object can also be a container like a bottle or a jerry-can for including e.g. oil, shampoo, insecticides, pesticides, solvents, paint thinner or other type of liquids.

A preferred packaging is folded cardboard or corrugated cardboard laminated with paper. Such packaging is preferably used for cosmetics, pharmaceuticals, food or electronics.

### White primer or ink

A white primer or ink may be applied on the substrate to enhance the contrast of the laser marked image. Such a white primer or ink contains a white pigment. The white pigment may be an inorganic or an organic pigment.

The white primer or ink preferably contains a white pigment selected from titanium oxide, barium sulfate, silicon oxide, aluminium oxide, magnesium oxide, calcium carbonate, kaolin, or talc.

A preferred white pigment is titanium oxide.

### Acid Scavenger

The laser markable layers may contain one or more acid scavengers.

Acid scavengers include organic or inorganic bases.

Examples of the inorganic bases include hydroxides of alkali metals or alkaline earth metals; secondary or tertiary phosphates, borates, carbonates; quinolinates and metaborates of alkali metals or alkaline earth metals; a combination of zinc hydroxide or zinc oxide and a chelating agent (e.g., sodium picolinate); hydrotalcite such as Hycite 713 from Clariant; ammonium hydroxide; hydroxides of quaternary alkylammoniums; and hydroxides of other metals.

Examples of the organic bases include aliphatic amines (e.g., trialkylamines, hydroxylamines and aliphatic polyamines); aromatic amines (e.g., N-alkyl-substituted aromatic amines, N-hydroxylalkyl-substituted aromatic amines and bis[p-(dialkylamino)phenyl]-methanes), heterocyclic amines, amidines, cyclic amidines, guanidines and cyclic guanidines.

Other preferred acid scavengers are HALS compounds. Examples of suitable HALS include Tinuvin™ 292, Tinuvin™ 123, Tinuvin™ 1198, Tinuvin™ 1198 L, Tinuvin™ 144, Tinuvin™ 152, Tinuvin™ 292, Tinuvin™ 292 HP, Tinuvin™ 5100, Tinuvin™ 622 SF, Tinuvin™ 770 DF, Chimassorb™ 2020 FDL, Chimassorb™ 944 LD from BASF; Hostavin 3051, Hostavin 3050, Hostavin N 30, Hostavin N321, Hostavin N 845 PP, Hostavin PR 31 from Clariant.

Further examples of acid scavengers are salts of weak organic acids such as carboxylates (e.g. calcium stearate).

A preferred acid scavenger is an organic base, more preferably an amine. A particular preferred acid scavenger is an organic base having a pKb of less than 7.

### UV absorbers

The laser markable layers may also comprise a UV-absorber. The UV-absorber is however preferably present in a protective layer, provided on top of the printed laser markable image.

Examples of suitable UV-absorbers include 2-hydroxyphenyl-benzophenones (BP) such as Chimassorb™ 81 and Chimassorb™ 90 from BASF; 2-(2-hydroxyphenyl)-benzotriazoles (BTZ) such as Tinuvin™ 109, Tinuvin™ 1130, Tinuvin™ 171, Tinuvin™ 326, Tinuvin™ 328, Tinuvin™ 384-2, Tinuvin™ 99-2, Tinuvin™ 900, Tinuvin™ 928, Tinuvin™ Carboprotect™^{,} Tinuvin™ 360, Tinuvin™ 1130, Tinuvin™ 327, Tinuvin™ 350, Tinuvin™ 234 from BASF, Mixxim™ BB/100 from FAIRMOUNT, Chiguard 5530 from Chitec; 2-hydroxy-phenyl-s-triazines (HPT) such as Tinuvin™ 460, Tinuvin™ 400, Tinuvin™ 405, Tinuvin™ 477, Tinuvin™ 479, Tinuvin™ 1577 ED, Tinuvin™ 1600 from BASF, 2-(2,4-dihydroxyphenyl)-4,6-bis-(2,4-dimethylphenyl)-s-triazine (CASRN1668-53-7) from Capot Chemical Ltd and 4-[4,6-bis(2-methyl-phenoxy)-1,3,5-triazin-2-yl]-1,3-benzenediol (CASRN13413-61-1); titanium dioxide such as Solasorb 100F from from Croda Chemicals; zink oxide such as Solasorb 200F from Croda Chemicals; benzoxazines such as Cyasorb UV-3638 F, CYASORB™ UV-1164 from CYTEC; and oxamides such as Sanduvor VSU from Clariant.

Preferred UV absorbers have in the wavelength region between 300 and 400 nm a maximum absorption above 330 nm, more preferably above 350 nm.

Particular preferred UV absorbers are hydroxyphenyl benzotriazoles and 2-hydroxyphenyl-s-triazines having a maximum absorption above 350 nm in the wavelength region 300 - 400 nm.

### EXAMPLES

### Materials

All materials used in the following examples were readily available from standard sources such as ALDRICH CHEMICAL Co. (Belgium) and ACROS (Belgium) unless otherwise specified. The water used was deionized water.
**Takenate D120N** is a urethane resin commercially available from Mitsui.
**Mowiol 4 88** is a polyvinyl alcohol commercially available from Hoechst.
**Olfine E1010** is a wetting agent commercially available from Shin-Etsu Chemical Company.
**Arlo** is a 15 wt% aqueous solution of Marlon A365, commercially available from Brenntag.
**Proxel Ultra 5** is a biocide commercially available from Avecia.
**Ralox 46** is a sterically hindered phenolix antioxidant from Raschig.
**Tinuvin 928** is an UV absorber commercially available from BASF.
**DISFLAMOLL TKP** is a low volatility halogen free phosphate plasticer from Lanxess.
**MOW** is an aqueous solution of bearing 15 wt% Mowiol 4 88 and 2 wt% Proxelk.
**MEK** is an abbreviation used for methylethylketone.
**1064IR** is an infrared dye having the following structure: 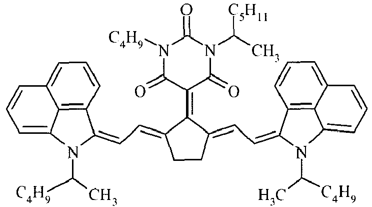 1064IR was prepared according to the synthetic methodology disclosed in paragraphs [0150] to [0159] of EP2463109 (Agfa).
**MLD1** is a leuco dye with the following formula commercially available from Mitsui. 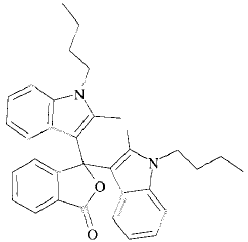
**MLD2** is a leuco dye with the following formula commercially available from Connect Chemical. 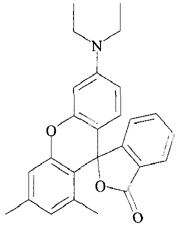
**MLD3** is a leuco dye with the following formula commercially available from Tokyo Kasei Kogyo.

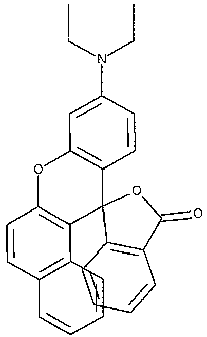

### Example 1

### Preparation of Magenta Leuco dye dispersion MLD-DISP

1.56 g Tinuvin 928, 11 g MLD1, 2.85 g MLD2 and 2.85 g MLD3 were added to 22.5 g ethyl acetate. 17.2 g Takenate D120N was added to the mixture. The mixture was stirred at 70 °C during 10 minutes in order to dissolve the components. The mixture was brought at 40 °C. 0.3 g 1064IR dissolved in 4 mL methylene chloride was added to the mixture.

In a separate flask, 0.2 g of Olfine E1010 was added to 6.9 g Mowiol 4 88 and 88 mL water.

The ethyl acetate-based solution was added to the aqueous solution. The mixture was emulsified using a T25 digital Ultra-turrax® with a 18N rotor commercially available from IKA at 16000 rpm during 5 minutes.

Ethyl acetate was removed under reduced pressure. During the process, also 13 mL of water was evaporated. 1.8 g Tetraethylenepentamine (CASRN112-57-2, Aldrich) in 13 mL water was added. This mixture was stirred for 16 hours at 60 °C and afterwards cooled to 25 °C. Large particles were removed by filtering the mixture using a cloth filter with 60 µm pores.

### Preparation of colour developing agent dispersion DEVELOP

In Pot A, 55 g of Arlo, 4.4 g Proxel Ultra 5 (commercially available from Avecia) and 366.674 g MOW were added to 524.601 g water. The mixture was stirred for 5 minutes at 50°C in order to dissolve all components.

In Pot B, 10.725 g 4,4'-Thiobis(6-tert-butyl-m-cresol) (commercially available from TCI Europe), 10.725 g Ralox 46 (commercially available from Raschig), 33 g Tinuvin 928 (commercially available from BASF), 8.25 g DISFLAMOLL TKP (commercially available from Lanxess), 4.125 g Ethyl Maleate (commercially available from TCI Europe) and 181.5 g Zinc 3,5-bis(alpha methylbenzyl) salicylate (CASRN53770-52-8, commercially available from Sanko Europe) were added to 495 g ethyl acetate. The mixture was stirred for 30 minutes at 50°C in order to dissolve all components.

While Pot A was stirred with a HOMO-REX high speed homogenizing mixer, the solution in Pot B was added to Pot A. The mixture was further stirred during 5 minutes with the HOMO-REX mixer. Ethyl acetate was removed from the mixture under reduced pressure.

### Preparation UV sensitive coating solution

500 mg of leucocrystal violet (Aldrich; CASRN 603-48-5), 882 mg of 2,2'-Bis(2-chlorophenyl)-4,4',5,5'-tetraphenyl-1,2'-biimidazole (CASRN 7189-82-4), 254 mg of p-toluenesulfonic acid monohydrate, and 2 g of polyvinylbutryral (Pioloform BL16, commercially available from Wacker) were added to 16.364 g of MEK.

### Preparation IR sensitive coating solution

The coating solution was prepared by mixing 1.37 g of MDISP, 3.03 g of Develop and 10.6 g of a 20.5 wt% solution of Mowiol 4 88 in water.

### Preparation laser markable article LMA-1

On one side of a PET foil (with a thickness of 150 µm) the UV sensitive coating solution prepared above was coated with an Elcometer Bird Film Applicator (from ELCOMETER INSTRUMENTS) with a thickness of 20µm.

Then, on the other side of the PET substrate, a 40 µm thick coating was applied using the IR sensitive coating solution.

The coatings were applied under yellow light to avoid colour-formation.

### Laser marking of the laser markable article LMA-1

The UV-side of the PET film was irradiated using a 395 LED light (12 W, speed 10m/min), coloring the imaged part blue and leaving the non-imaged part transparent. Subsequently, the PET sheet was irradiated using a 1064 nm laser (Genesis MX 1064-10000 MTM from COHERENT) through the UV layer, resulting in a purple color in the places where the material was activated by UV-light, and in a magenta color in the areas non-imaged by UV.

## Claims

1. A laser markable article comprising a first laser markable layer capable of forming a colour upon exposure to UV radiation, a second and optionally a third laser markable layer capable of forming a colour upon exposure to IR radiation, **characterized in that** the second or third laser markable layer comprises a polymethine infrared radiation absorbing dye (IR dye) having at least one structural element according to Formula I or Formula II, 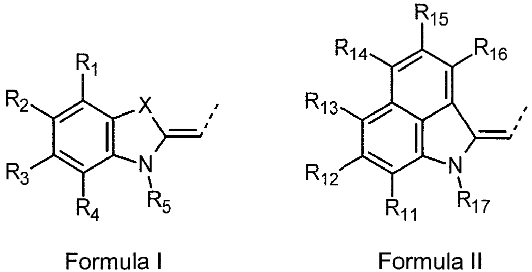 wherein
X is selected from the group consisting of O, NR₈, S and CR₉R₁₀,
R₁ to R₄ and R₁₁ to R₁₆ are independently selected from the group consisting of a hydrogen atom, a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted (hetero)aryl group, a halogen, an alkoxy group, a carboxylic acid, an ester, an amide, a thioether, a sulfone, a sulfoxide, a sulfonamide and a sulfonic acid,
R₅, R₈, R₉, R₁₀ and R₁₇ are independently selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted (hetero)aryl group,
R₁ and R₂, R₂ and R₃, R₃ and R₄, R₄ and R₅, R₉ and R₁₀, R₁₁ and R₁₂, R₁₂ and R₁₃, R₁₄ and R₁₅, R₁₅ and R₁₆, and R₁₁ and R₁₇ may represent the necessary atoms to form a substituted or unsubstituted 5 to 8 membered ring,
the dashed line represents the bond to the rest of the cyanine IR dye.

2. The laser markable article according to claim 1 wherein the IR dye has a structure according to Formula III, 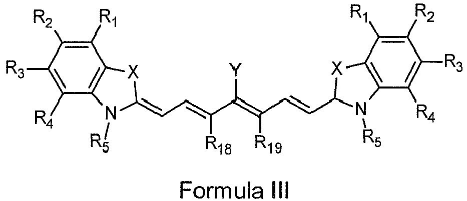 wherein
R₁ to R₅ and X have the same meaning as in Formula I,
R₁₈ and R₁₉ are independently selected form the group consisting of a hydrogen atom, a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted (hetero)aryl group,
R₁₈ and R₁₉ may represent the necessary atoms to form a 5 to 8 membered ring,
Y is selected from the group consisting of a hydrogen atom, a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted (hetero)aryl group, a disubstituted amine group, a thioether, a sulfone, a sulfoxide, an amide, a sulfonamide and a halogen.

3. The laser markable article according to claim 1 or 2 wherein the IR dye has a structural moiety according to Formula IV, 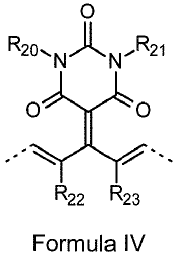 wherein
R₂₀ and R₂₁ are independently selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted (hetero)aryl group,
R₂₂ and R₂₃ are independently selected from a hydrogen atom, a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted (hetero)aryl group,
R₂₂ and R₂₃ may represent the necessary atoms to form a substituted or unsubstituted 5 or 6 membered ring,
the dashed line represents the bond to the rest of the IR dye.

4. The laser markable article according to any of the preceding claims wherein the IR dye has a structure according to Formula V, 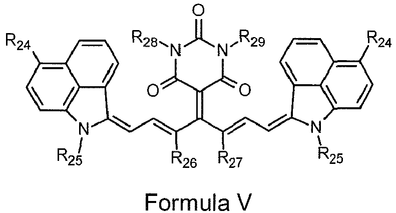 wherein
R₂₄ is selected from the group consisting of a hydrogen atom, a substituted or unsubstituted alkyl group, a substituted or unsubstituted alkenyl group, a substituted or unsubstituted alkynyl group, a substituted or unsubstituted aralkyl group, a substituted or unsubstituted alkaryl group, a substituted or unsubstituted (hetero)aryl group, a halogen, an alkoxy group, a carboxylic acid, an ester, an amide, a thioether, sulfone, a sulfoxide, a sulfonamide and a sulfonic acid,
R₂₅, R₂₈ and R₂₉ are independently selected from the group consisting of a substituted or unsubstituted alkyl group, a substituted or unsubstituted alkenyl group, a substituted or unsubstituted alkynyl group, a substituted or unsubstituted aralkyl group, a substituted or unsubstituted alkaryl group and a substituted or unsubstituted (hetero)aryl group,
R₂₆ and R₂₇ represent the necessary atoms to form a substituted or unsubstituted 5 or 6 membered ring.

5. The laser markable article according to any of the preceding claims wherein the IR dye is a hepta- or nonamethine dye.

6. The laser markable article according to any of the preceding claims wherein the IR dye has an absorption maximum in the infrared region between 780 nm and 2500 nm.

7. The laser markable article according to any of the preceding claims wherein the first laser markable layer comprises a hexaarylbisimidazole (HABI) and a photo-oxidizable leucodye.

8. The laser markable article according to any of the claims 1 to 6 wherein the first laser markable layer comprises a diacetylene compound.

9. The laser markable article according to any of the preceding claims wherein the second or third laser markable layer further comprises a leuco dye and a colour developing agent or colour developing agent precursor.

10. The laser markable article according to any of the preceding claims wherein the second laser markable layer comprises a first IR dye as defined in any of the claims 1 to 6 and the third laser markable layer comprises a second IR dye as defined in any of the claims 1 to 6.

11. A laser markable article comprising a first laser markable layer capable of forming a colour upon exposure to UV radiation and another colour upon exposure to IR radiation and a second laser markable layer capable of forming a colour upon exposure to IR radiation, wherein the first or the second laser markable layer comprises the IR dye as defined in any of the claims 1 to 6.

12. The laser markable article according to claim 11 wherein the first laser markable layer comprises a diacetylene compound and a first IR dye as defined in any of the claims 1 to 6, and wherein the second laser markable layer comprises a leuco dye and a colour developing agent or colour developing agent precursor and a second IR dye as defined in any of the claims 1 to 6.

13. A method of forming a multicolour laser marked image comprising the steps of:
- imagewise exposing the first laser markable layer of a laser markable article as defined in any of the claims 1 to 10 with a UV laser thereby forming a first coloured region (C-1),
- imagewise exposing the second laser markable layer of a laser markable article as defined in any of the claims 1 to 10 with a first IR laser thereby forming a second coloured region (C-2),
- optionally imagewise exposing the third laser markable layer of a laser marked article as defined in any of the claim 1 to 10 with a second IR laser thereby forming a third coloured region (C-3),
wherein the first and second IR laser may be the same.

14. A method of forming a multicolour laser marked image comprising the steps of:
- imagewise exposing the first laser markable layer of the laser markable article as defined in claim 11 or 12 with a UV laser thereby forming regions having a first colour (C-1),
- imagewise exposing the regions having a first colour (C-1) with a first IR laser thereby forming regions having a third colour (C-3),
- imagewise exposing the second laser markable layer of the laser markable article as defined in claim 10 or 11 with a second IR laser thereby forming a second colour (C-2),
wherein the first and second IR laser may be the same.

15. The method of forming a multicolour laser marked image according to claim 13 or 14 wherein a difference between the emission wavelength of the first IR laser and the emission wavelength of the second IR laser is at least 100 nm.
